# EUROPÄISCHE PATENTANMELDUNG

(11) **EP 2 868 822 A1**
(43) Veröffentlichungstag der Anmeldung: **06.05.2015**
(21) Anmeldenummer: 14189658.9
(22) Anmeldetag: 21.10.2014
(51) Int. Cl.: E03F 5/14, B01D 33/333, B01D 33/46, E02B 8/02

(54) **Siebvorrichtung zum Abscheiden und Abtransport von Verunreinigungen aus Abwasser**

(30) Priorität: 29.10.2013 DE 102013111915
(71) Anmelder: Huber SE, 92334 Berching (DE)
(72) Erfinder: Lindl, Markus, 92345 Dietfurt (DE)
(74) Vertreter: Baudler, Ron

(57) **Zusammenfassung**

Die Erfindung betrifft eine Siebvorrichtung zum Abscheiden und Abtransport von Verunreinigungen (1) aus Abwasser (2) mit wenigstens zwei endlosen, parallel zueinander verlaufenden und mit Hilfe eines Antriebs (3) in einer Förderrichtung (F) antreibbaren Antriebselementen (4), wobei die Antrieb-selemente (4) jeweils über einen unteren Umlenkbereich (5) und einen oberen Umlenkbereich (6) auf einer Umlaufbahn geführt sind, wobei sich zwischen den Antriebselementen (4) eine Vielzahl von zueinander benachbart angeordneten und mit den Antriebselementen (4) in Verbindung stehenden Siebelementen (8) erstreckt, wobei zumindest der Großteil der Siebelemente (8) in einer Seitenansicht der Siebvorrichtung jeweils eine nach außen gewölbte Siebfläche (9) aufweist, und wobei die Siebvorrichtung eine dem oberen Umlenkbereich (6) in Förderrichtung (F) nachgeordnete Reinigungseinrichtung (10) aufweist, die von den Siebelementen (8) während ihrer Bewegung entlang der genannten Umlaufbahn passierbar ist, und die ausgebildet ist, die von den Siebelementen (8) zurückgehaltenen Verunreinigungen (1) von den Siebflächen (9) der Siebelemente (8) zu entfernen. Erfindungsgemäß wird vorgeschlagen, dass die Antriebselemente (4) und/oder die Siebelemente (8) im Bereich der Reinigungseinrichtung (10) mit Hilfe von Führungselementen (11) jeweils auf einer Führungsbahn (12) geführt sind, wobei die Führungsbahn (12) in der genannten Seitenansicht im Bereich der Reinigungseinrichtung (10) einen nach außen, d. h. in Richtung der Reinigungseinrichtung (10), gewölbten Abschnitt (13) besitzt.

## Beschreibung

Die vorliegende Erfindung betrifft eine Siebvorrichtung zum Abscheiden und Abtransport von Verunreinigungen aus Abwasser mit wenigstens zwei endlosen, mit Hilfe eines Antriebs in einer Förderrichtung antreibbaren und parallel zueinander verlaufenden Antriebselementen, wobei die Antriebselemente jeweils über einen unteren Umlenkbereich und einen oberen Umlenkbereich auf einer Umlaufbahn geführt sind, wobei sich zwischen den Antriebselementen eine Vielzahl von zueinander benachbart angeordneten und mit den Antriebselementen in Verbindung stehenden Siebelementen erstreckt, wobei zumindest der Großteil der Siebelemente in einer Seitenansicht der Siebvorrichtung jeweils eine nach außen gewölbte Siebfläche aufweist, und wobei die Siebvorrichtung eine Reinigungseinrichtung aufweist, die von den Siebelementen während ihrer Bewegung entlang der genannten Umlaufbahn passierbar ist, um von den Siebelementen zurückgehaltene Verunreinigungen von den Siebflächen der Siebelemente zu entfernen.

Eine gattungsgemäße Siebvorrichtung ist beispielsweise aus der DE 10 2004 062 316 A1 bekannt und dient dem Abscheiden von Verunreinigungen aus einem in einem Abwasserkanal strömenden Abwasser. Die Vorrichtung besitzt hierfür zwei parallel zueinander verlaufende Ketten, zwischen denen sich wiederum eine Vielzahl von benachbarten Siebelementen erstreckt. Die Siebelemente weisen jeweils eine nach außen gewölbte Siebfläche auf, durch welche die im Abwasser mitgeführten Verunreinigungen zurückgehalten werden. Werden die Ketten mit Hilfe eines Elektromotors auf ihrer Umlaufbahn bewegt, so gelangen die Verunreinigungen schließlich in einen dem oberen Umlenkbereich der Ketten in Förderrichtung nachgeordneten Bereich und werden dort mit Hilfe einer Bürste von den Siebelementen gelöst, um letztendlich über einen Auswurf in einen Sammelbehälter, beispielsweise einen Container, zu gelangen. Das von den Verunreinigungen befreite Abwasser passiert die Siebvorrichtung und kann seiner weiteren Verwendung zugeführt werden.

Nachteilig hierbei ist die Tatsache, dass die Reinigung in einem Bereich erfolgt, in denen sich die Siebelemente auf einem geradlinig verlaufenden Abschnitt der Umlaufbahn befinden. Die nach außen gewölbten Siebflächen der einzelnen Siebelemente bilden in diesem Bereich keine ebene Fläche, sondern eine Siebfläche, die aus einer Abfolge von Siebtälern und Siebbergen besteht. Dies hat wiederum zur Folge, dass die Bürste bei zu großem Abstand zu den Siebflächen die Siebtäler nicht vollständig erreichen und abreinigen kann. Wird der genannte Abstand hingegen so klein gewählt, dass die Bürste die gesamte Siebfläche erreicht, so tauchen die Borsten der Bürsten jedoch im Bereich der Siebberge in die Siebfläche bzw. deren Sieböffnungen ein, so dass eine abnutzungsbedingte Beschädigung der Bürste auf lange Zeit gesehen unvermeidbar ist.

Aufgabe der vorliegenden Erfindung ist es daher, eine gattungsgemäße Siebvorrichtung vorzuschlagen, bei der eine zuverlässige Abreinigung der Siebflächen ohne die Gefahr einer Beschädigung der Reinigungseinrichtung möglich ist.

Die Aufgabe wird gelöst durch eine Siebvorrichtung mit den Merkmalen des Patentanspruchs 1.

Erfindungsgemäß zeichnet sich die Siebvorrichtung nun dadurch aus, dass die Antriebselemente, mit denen die Siebelemente auf ihrer Umlaufbahn geführt sind und/oder die Siebelemente selbst im Bereich der Reinigungseinrichtung mit Hilfe von Führungselementen auf einer Führungsbahn geführt sind, wobei die Führungsbahn in der Seitenansicht der Siebvorrichtung (d. h. mit Blick auf eine Ebene, die parallel zu den beiden durch die Antriebselemente gebildeten Ebenen verläuft) im Bereich der Reinigungseinrichtung einen nach außen, d. h. in Richtung der Reinigungseinrichtung, gewölbten Abschnitt besitzt. Mit anderen Worten bewegen sich die Siebelemente gemäß vorliegender Erfindung im Bereich der Reinigungseinrichtung, die vorzugsweise als angetriebene Reinigungsbürste ausgebildet ist, nicht auf einem geradlinig verlaufenden Abschnitt der Umlaufbahn. Vielmehr sind im Bereich der Reinigungseinrichtung Führungselemente vorhanden, die einen nach außen gewölbten Abschnitt der Führungsbahn definieren. Der genannte Abschnitt der Führungsbahn befindet sich in Förderrichtung gesehen nach einem oberen Umlenkbereich der Umlaufbahn, wobei die Antriebselemente (z. B. zwei parallel verlaufende Umlenkketten, die jeweils beidseitig mit den einzelnen Siebelementen in Verbindung stehen) im Bereich des oberen Umlenkbereichs beispielsweise mit Hilfe von zwei parallel zueinander angeordneten Zahnrädern geführt und angetrieben sein können.

Durch den nach außen gewölbten Führungsabschnitt werden die Siebelemente in einem dem oberen Umlenkbereich in Förderrichtung nachgeordneten Bereich auf eine nach außen gewölbte Führungsbahn gelenkt. Die Siebelemente werden hierdurch nicht geradlinig an der Reinigungseinrichtung vorbeigeführt. Vielmehr bewirkt der gewölbte Führungsabschnitt, dass der Abstand zwischen der Siebfläche des jeweils an der Reinigungseinrichtung vorbeigeführten Siebelements und dem mit der Siebfläche in Kontakt stehenden Abschnitt der Reinigungseinrichtung beim Passieren des Siebelements im Wesentlichen konstant bleibt. Auf diese Weise kann nahezu die gesamte nach außen weisende Siebfläche der einzelnen Siebelemente von der Reinigungseinrichtung abgereinigt werden, ohne dass die mit den Siebflächen in Kontakt kommenden Abschnitte der Reinigungseinrichtung (beispielsweise die äußeren Abschnitte der Borsten einer Reinigungsbürste) übermäßig in die Siebberge der Siebflächen bzw. den dort platzierten Sieböffnungen eintauchen müssten. Eine Beschädigung der Reinigungseinrichtung wird hierdurch zuverlässig vermieden.

Im Ergebnis besitzt die Siebvorrichtung also vorzugsweise zwei parallel verlaufende und auf einer Endlosbahn geführte Antriebselemente in Form von zwei Endlosketten. An den Endlosketten ist wiederum eine Vielzahl von Siebelementen befestigt, die sich vorzugsweise senkrecht zur Förderrichtung der Ketten zwischen diesen erstrecken und von den Ketten auf einer Umlaufbahn geführt sind. In einem dem oberen Umlenkbereich der Ketten in Förderrichtung nachgeordneten Bereich ist wiederum eine Reinigungseinrichtung (vorzugsweise in Form einer rotierenden Reinigungsbürste) vorgesehen, die sich im Betrieb beispielsweise entgegen der Förderrichtung der Ketten bewegt. Schließlich ist in einem dem oberen Umlenkbereich nachgeordneten Abschnitt der Umlaufbahn der Ketten eine Führungsbahn vorgesehen, die einen nach außen gewölbten Abschnitt besitzt.

Vorteilhaft ist es ferner, wenn der nach außen gewölbte Abschnitt in Förderrichtung, vorzugsweise direkt, in einen nach innen gewölbten Abschnitt übergeht. Hierdurch kann die Abreinigung der jeweiligen Sieboberflächen weiter verbessert werden. So kann durch den nach innen gewölbten Abschnitt eine Verlängerung der nach außen gewölbten Führungsbahn erreicht werden. Wäre der nach innen gewölbte Abschnitt nicht vorhanden, so würden die Siebelemente nach Passieren des nach außen gewölbten Führungsabschnitts wieder auf einen geradlinig verlaufenden Führungsabschnitt umgelenkt, wobei die Länge des nach außen gewölbten Führungsabschnitts beschränkt wäre. Im Gegensatz hierzu kann der nach außen gewölbte Führungsabschnitt verlängert werden, wenn dieser in Förderrichtung in einen nach innen gewölbten Führungsabschnitt übergeht, der die Förderelemente schließlich wieder auf die nachfolgend geradlinig verlaufende Umlaufbahn lenkt.

Vorteilhaft ist es, wenn die Führungsbahn in der genannten Seitenansicht im Bereich der Reinigungseinrichtung S-förmig verläuft. Mit anderen Worten kann der nach außen gewölbte Führungsabschnitt unmittelbar in den nach innen gewölbten Führungsabschnitt übergehen, dem wiederum in Förderrichtung ein geradlinig verlaufender Abschnitt der Umlaufbahn folgt. Hierbei ist es weiterhin von Vorteil, wenn der nach außen gewölbte und der nach innen gewölbte Abschnitt in einer Seitenansicht der Siebvorrichtung gesehen in etwa auf einem Kreisbogen liegen. Der Radius des Kreisbogens, dem der nach außen gewölbte Führungsabschnitt folgt, kann hierbei kleiner oder größer sein als der Radius des Kreisbogens, dem der nach innen gewölbte Führungsabschnitt folgt. Denkbar ist ebenso, dass beide Radien gleich groß sind.

Auch ist es von Vorteil, wenn der nach innen gewölbte Abschnitt der Führungsbahn der Reinigungsvorrichtung und/oder dem nach außen gewölbten Abschnitt der Führungsbahn in Förderrichtung nachgeordnet ist. Es kann also von Vorteil sein, wenn der obere Umlenkbereich in Förderrichtung gesehen direkt oder über einen kurzen geradlinigen Abschnitt in den nach außen gewölbten Führungsabschnitt übergeht. Dieser Abschnitt kann wiederum (ebenfalls direkt oder indirekt) in den nach innen gewölbten Führungsabschnitt übergehen, der schließlich in einen geradlinig verlaufenden Abschnitt der Umlaufbahn übergehen kann. Der zuletzt genannte Abschnitt kann sich bis zu einem unteren Umlenkbereich erstrecken, in dem die nach unten laufenden Siebelemente in einen schräg nach oben ansteigenden Bereich der Umlaufbahn umgelenkt werden. In diesem Bereich kommen die Siebelemente mit dem verunreinigten Abwasser in Kontakt und bewirken ein Zurückhalten der Verunreinigungen, die durch die Bewegung der Siebelemente nach oben gelangen. Nach Passieren des oberen Umlenkbereichs werden die Siebelemente schließlich durch die erfindungsgemäß nach außen gewölbten Führungsabschnitte umgelenkt und von der Reinigungseinrichtung von den Verunreinigungen befreit, so dass sie nach der Umlenkung im unteren Umlenkbereich erneut der Siebung des Abwassers dienen können.

Des Weiteren ist es vorteilhaft, wenn der nach außen gewölbte Abschnitt der Führungsbahn in der genannten Seitenansicht auf Höhe der ihm benachbarten Reinigungseinrichtung angeordnet ist. Hierdurch befindet sich der nach außen weisende Abschnitt der Siebflächen stets auf Höhe der Reinigungseinrichtung. Handelt es sich hierbei um eine rotierende Reinigungsbürste, so kann diese so platziert werden, dass die äußeren Spitzen der Reinigungsborsten mit der Siebfläche in Kontakt kommen, ohne (übermäßig) in die Sieböffnungen der Siebelemente einzutauchen. Eine unerwünschte Abnutzung der genannten Borsten wird hierdurch zuverlässig vermieden.

Vorteile bringt es zudem mit sich, wenn dem nach innen gewölbten Abschnitt der Führungsbahn in Förderrichtung ein geradlinig verlaufender Abschnitt der Führungsbahn nachgeordnet ist. Dieser Abschnitt, auf dem sich die Siebelemente im Betrieb der Siebvorrichtung nach unten bewegen, kann wiederum parallel zu dem Abschnitt der Umlaufbahn der Siebelemente verlaufen, der sich anströmseitig zwischen dem oberen und dem unteren Umlenkbereich erstreckt und auf dem sich die Siebelemente nach oben bewegen.

Besondere Vorteile bringt es mit sich, wenn der Tiefpunkt der Wölbung des nach außen gerichteten Abschnitts und der Tiefpunkt der Wölbung des nach innen gerichteten Abschnitts in der genannten Seitenansicht auf unterschiedlichen Seiten einer gedachten Verlängerung des im vorherigen Absatz genannten geradlinig verlaufenden Abschnitts liegen. Die Siebelemente werden in diesem Fall ausgehend von der gedachten Verlängerung zuerst nach außen und dann nach innen umgelenkt. Im Anschluss daran erfolgt eine Umlenkung in Richtung der genannten Verlängerung, so dass sich die Siebelemente nach Durchlaufen der gewölbten Abschnitte wieder auf einer geradlinig verlaufenden Umlaufbahn befinden, die schließlich im unteren Bereich der Siebvorrichtung, d. h. im unteren Umlenkbereich, in eine halbkreisförmige Bahn übergeht. Nach Passieren des unteren Umlenkbereichs folgen die Siebelemente schließlich wieder einem vorzugsweise schräg nach oben gerichteten geradlinigen Abschnitt der Umlaufbahn, in dem sie zumindest im unteren Bereich dieses Abschnitts mit dem Abwasser in Kontakt stehen und das gewünschte Zurückhalten der Verunreinigungen bewirken.

Ebenso bringt es Vorteile mit sich, wenn dem nach außen gewölbten Abschnitt der Führungsbahn in Förderrichtung ein geradlinig verlaufender Abschnitt der Förderbahn oder ein Umlenkabschnitt des oberen Umlenkbereichs vorgeordnet ist. Die Siebelemente können also nach Passieren des oberen Umlenkbereichs entweder direkt durch die nach außen gewölbten Führungsabschnitte nach außen hin umgelenkt werden. Denkbar ist es ebenso, dass die Siebelemente nach dem Umlenkbereich (in Förderrichtung gesehen) auf einem geradlinigen Führungsabschnitt geführt werden und erst im Anschluss daran nach außen ausgelenkt werden, um mit der Reinigungseinrichtung in Kontakt zu gelangen.

Ebenso ist es vorteilhaft, wenn die Antriebselemente als endlose Antriebsketten ausgebildet sind, die im Betrieb der Siebvorrichtung jeweils mit Hilfe von Führungsrollen entlang einer der Führungsbahnen führbar sind. Die Führung der Siebelemente erfolgt in diesem Fall nicht direkt. Vielmehr sind die Siebelemente beidseitig jeweilig mit einer der parallel verlaufenden Antriebsketten verbunden. Die Antriebsketten besitzen wiederum die genannten Führungsrollen, wobei diese alternativ auch an den Siebelementen selbst befestigt sein können. In jedem Fall ist es von Vorteil, wenn die Führungsrollen in beispielsweise kanalförmigen Führungen geführt sind, die z. B. durch entsprechend zueinander beabstandete Führungselemente gebildet werden. Durch die Führungsrollen wird eine besonders reibungsarme Führung der Siebelemente bewirkt, wobei die Führungselemente zumindest im Bereich der nach außen und/oder nach innen gewölbten Führungsabschnitte vorhanden sein sollten.

Des Weiteren ist es vorteilhaft, wenn der Abstand zwischen dem Tiefpunkt der Wölbung des nach außen gewölbten Abschnitts und dem Tiefpunkt der Wölbung des nach innen gewölbten Abschnitts einen Betrag aufweist, der dem 0,5 bis 2-fachen, vorzugsweise dem 0,8 bis 1,2-fachen, Abstand zweier in Förderrichtung benachbarter Führungsrollen entspricht, wenn sich die genannten Führungsrollen im Bereich eines geradlinigen Abschnitts der Führungsbahn befinden. In diesem Fall erfolgt das Umlenken der Siebelemente von dem nach außen gewölbten Führungsabschnitt auf den nach innen gerichteten Führungsabschnitt in einem Abstand, der in etwa der Höhe der Siebflächen entspricht (die Höhe ist hierbei definiert als die räumliche Erstreckung der einzelnen Siebflächen in Förderrichtung).

Vorteilhaft ist es, wenn die Führungsbahn im Bereich der Wölbungen durch beidseitig der Führungsrollen platzierte Führungselemente gebildet ist. Die Führungselemente bewirken in diesem Fall eine beidseitige Führung der Führungsrollen, wobei die Führungselemente parallel zu den Drehachsen der Führungsrollen verlaufende Führungsflächen besitzen. Ferner könnten zusätzliche Führungsflächen vorhanden sein, die sich senkrecht zu den genannten Drehachsen erstrecken und die eine seitliche Führung der Führungsrollen, d. h. eine Führung auf den den Siebelementen abgewandten Seiten der Führungsrollen, bewirken. Die Führungselemente und/oder die Führungsrollen können zudem aus einem abriebfesten Kunststoff gefertigt sein, um eine einfache Herstellung bei geringer Reibung zwischen Führungselementen und Führungsrollen zu ermöglichen.

Vorteile bringt es zudem mit sich, wenn die Führungselemente den Führungsrollen zugewandte Führungsflächen besitzen, deren gegenseitiger Abstand im Bereich der Wölbungen vorzugsweise konstant ist. Die Führungsflächen verlaufen hierbei vorzugsweise parallel zu den Drehachsen der Führungsrollen, wobei der Abstand der Führungsflächen geringfügig größer sein sollte als der Durchmesser der Führungsrollen.

Vorteilhaft ist es zudem, wenn die Reinigungseinrichtung eine, vorzugsweise ortsfest gelagerte, Reinigungsbürste umfasst, die mit Hilfe eines Antriebs um eine Drehachse antreibbar ist, wobei die Drehachse vorzugsweise senkrecht zur Förderrichtung verläuft, und wobei die Reinigungsbürste vorzugsweise in einer Drehrichtung antreibbar ist, die eine der Förderrichtung der im Betrieb der Siebvorrichtung an der Reinigungsbürste vorbeigeführten Siebelemente gegenläufige Bewegung der nach außen gerichteten und mit der jeweils benachbarten Siebfläche in Kontakt stehenden Bürstenabschnitte bewirkt. Mit anderen Worten wird die Drehrichtung der Reinigungsbürste im Betrieb der Siebvorrichtung derart gewählt, dass sich die mit der jeweiligen Siebfläche in Berührung stehenden Bürstenabschnitte in die der Förderrichtung der Siebelemente entgegengesetzte Richtung bewegen. Die Reinigungswirkung ist in diesem Fall besonders hoch.

Weitere Vorteile der Erfindung sind in den nachfolgenden Ausführungsbeispielen beschrieben. Es zeigen:
- **Figur 1**: die genannte Seitenansicht einer gattungsgemäßen Siebvorrichtung,
- **Figur 2**: den oberen Umlenkbereich der Siebvorrichtung aus Figur 1,
- **Figur 3**: den oberen Umlenkbereich einer erfindungsgemäßen Siebvorrichtung,
- **Figur 4**: den oberen Umlenkbereich der Siebvorrichtung aus Figur 3 mit einer gegenüber Figur 3 veränderten Stellung der Siebelemente,
- **Figur 5**: die Führungsbahn der Siebelemente aus den Figuren 3 und 4,
- **Figur 6**: die Ansicht aus Figur 5 in leicht abgeänderter Form,
- **Figur 7**: zwei zusätzliche Merkmale der Ansicht gemäß Figur 6
- **Figur 8**: die Führungsbahn der Siebelemente einer weiteren erfindungsgemäßen Siebvorrichtung, und
- **Figur 9**: den oberen Umlenkbereich einer weiteren erfindungsgemäßen Siebvorrichtung.

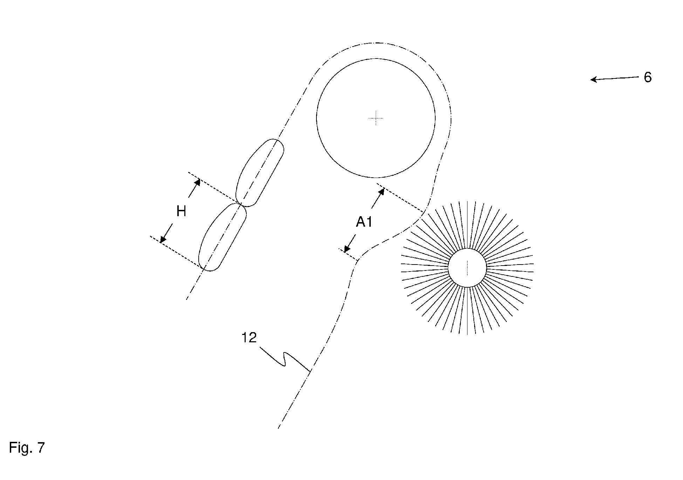

Vorab sei erwähnt, dass in Figuren, die mehrere gleichartig dargestellte Bauteile (z. B. Siebelemente 8) zeigen, teilweise nur eines von mehreren gleichartigen Bauteilen mit Bezugszeichen versehen ist, um eine gute Übersichtlichkeit zu gewährleisten. Ebenso sind nicht alle Bauteile in sämtlichen Figuren mit Bezugszeichen versehen (siehe beispielsweise Figur 7). Generell sind gleich gezeichnete Bauteile jedoch auch als solche zu verstehen, so dass hinsichtlich weggelassener Bezugszeichen in einer Figur auf die jeweils restlichen Figuren verwiesen werden kann.

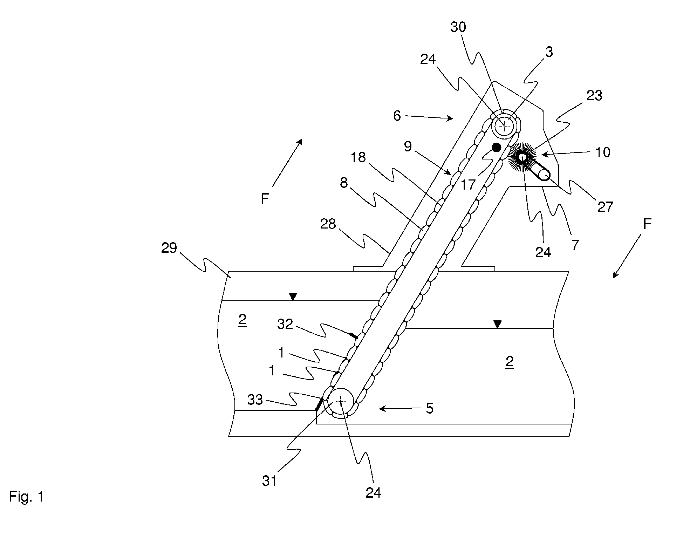

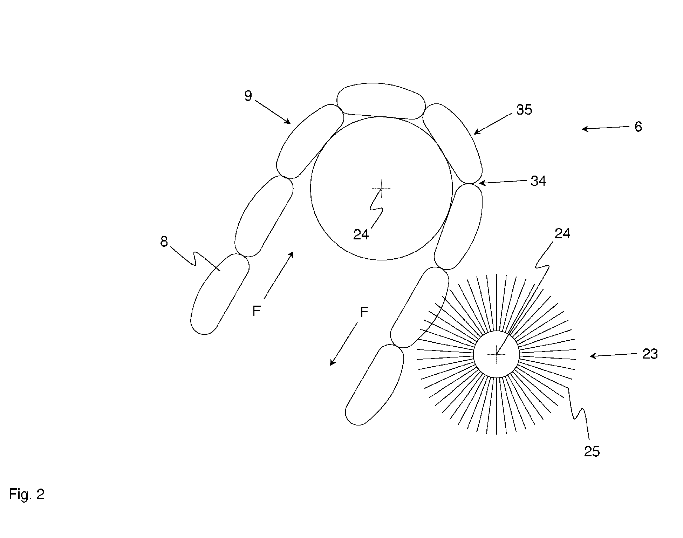

Figur 1 zeigt eine gattungsgemäße Siebvorrichtung, die in einem öffentlichen Abwasserkanal 29 platziert ist. Die Siebvorrichtung besitzt prinzipiell eine Trägerstruktur 28, die beispielsweise oberhalb des Abwasserkanals 29 mit einem entsprechenden Fundament verbunden ist. Ferner umfasst die Siebvorrichtung zwei Antriebsketten 18, die senkrecht zur Blattebene parallel zueinander verlaufen (nur eine der Antriebsketten 18 ist daher sichtbar). Zwischen den beiden Antriebsketten 18 erstreckt sich eine Vielzahl von senkrecht zur Blattebene verlaufenen Siebelementen 8, die jeweils beidseitig mit den Antriebsketten 18 verbunden sind und jeweils eine nach außen gerichtete und nach außen gewölbte Siebfläche 9 aufweisen (zur prinzipiellen Form siehe beispielsweise Figur 2). Die Siebfläche 9 kann beispielsweise durch eine entsprechend gebogene und eine Vielzahl von Sieböffnungen aufweisende Metallfläche gebildet sein.

Während des Betriebs der Siebvorrichtung werden die Antriebsketten 18 jeweils über zwei parallel zueinander angeordnete obere Zahnräder 30 und zwei ebenfalls parallel zueinander angeordnete untere Zahnräder 31, die um entsprechende Drehachsen 24 drehbar sind, auf einer endlosen Umlaufbahn geführt, wobei der Antrieb 3 der Antriebsketten 18 beispielsweise mit Hilfe eines in einem oberen Umlenkbereich 6 angeordneten Antriebs 3 (z. B. einem Elektromotor) erfolgen kann.

Im Betrieb der Siebvorrichtung werden die anströmseitig platzierten Siebelemente 8 (in Figur 1 auf der linken Seite angeordnet) von dem im Abwasserkanal 29 strömenden Abwasser 2 angeströmt, wobei im unteren Umlenkbereich 5 und bei Bedarf auch im seitlichen Bereich der Siebvorrichtung eine Dichtleiste 33 platziert sein kann, um die Siebvorrichtung gegenüber dem Abwasserkanal 29 abzudichten und ein Passieren von Verunreinigungen 1 in diesen Bereichen zu verhindern.

Während des Siebvorgangs kann das Abwasser 2 die Sieböffnungen der Siebelemente 8 passieren, während die vom Abwasser 2 mitgeführten Verunreinigungen 1 von den Siebelementen 8 zurückgehalten werden (ergänzend zu den Siebelementen 8 können ein oder mehrere Reinigungsharken 32 vorgesehen sein, um auch größere Verunreinigungen 1 sicher aus dem Abwasserkanal 29 entfernen zu können). Die Siebelemente 8 und damit auch zurückgehaltenen Verunreinigungen 1 gelangen schließlich nach dem Passieren des oberen Umlenkbereichs 6 in den Bereich einer Reinigungseinrichtung 10 (beispielsweise einer mit Hilfe eines Bürstenantriebs 27 rotierenden Reinigungsbürste 23), mit der die Verunreinigungen 1 von den Siebflächen 9 der Siebelemente 8 abgestreift werden (wobei zusätzlich eine Spritzdüse 17 oder Spritzdüsenleiste vorhanden sein kann, mit deren Hilfe Wasser von innen nach außen durch die Siebflächen 9 gespritzt werden kann, um das Abreinigen zu unterstützen).

Die von den Siebflächen 9 abgelösten Verunreinigungen 1 gelangen schließlich, beispielsweise über einen Auswurf 7, nach außen und können z. B. in einem entsprechenden (nicht gezeigten) Auffangbehälter gesammelt werden.

Den wesentlichen Nachteil der bisher bekannten Siebvorrichtungen zeigt Figur 2. Wie aus dieser Figur ersichtlich, muss die Reinigungsbürste 23 relativ nah an den Siebelementen 8 platziert werden, um auch die im Kontaktbereich zweier Siebelemente 8 vorhandenen Täler 34 der aus den einzelnen Siebflächen 9 gebildeten Gesamtsiebfläche zu erreichen und entsprechend abreinigen zu können. Dies hat wiederum zwangsläufig zur Folge, dass die nach außen gerichteten Bürstenabschnitte 25 der Reinigungsbürste 23 im Bereich der Berge 35 der Siebflächen 9 in die Sieböffnungen der Siebflächen 9 hineinragen, wobei dies auf Dauer zu einer übermäßigen Abnutzung der Reinigungsbürste 23 führt.

Um diesem Nachteil zu begegnen, wird im Rahmen der Erfindung vorgeschlagen, dass die Antriebselemente 4 der Siebelemente 8, die vorzugsweise in Form der genannten Antriebsketten 18 vorliegen, und/oder die Siebelemente 8 selbst im Bereich der Reinigungseinrichtung 10 mit Hilfe von Führungselementen 11 jeweils auf einer Führungsbahn 12 geführt sind, wobei die Führungsbahn 12 in der in Figur 1 gezeigten Seitenansicht im Bereich der Reinigungseinrichtung 10 einen nach außen, d. h. in Richtung der Reinigungseinrichtung 10, gewölbten Abschnitt 13 besitzt. Die Siebelemente 8 passieren die Reinigungseinrichtung 10 also nicht wie im Stand der Technik üblich auf einer geradlinig verlaufenden Führungsbahn 12. Vielmehr besitzt diese im Bereich der Reinigungseinrichtung 10 einen nach außen gewölbten Abschnitt 13, der ein Umlenken der Siebelemente 8 in Richtung der Reinigungseinrichtung 10 bewirkt.

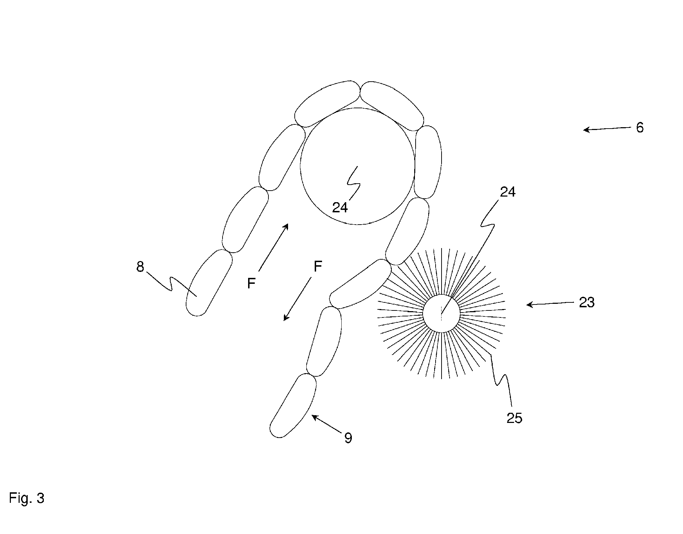

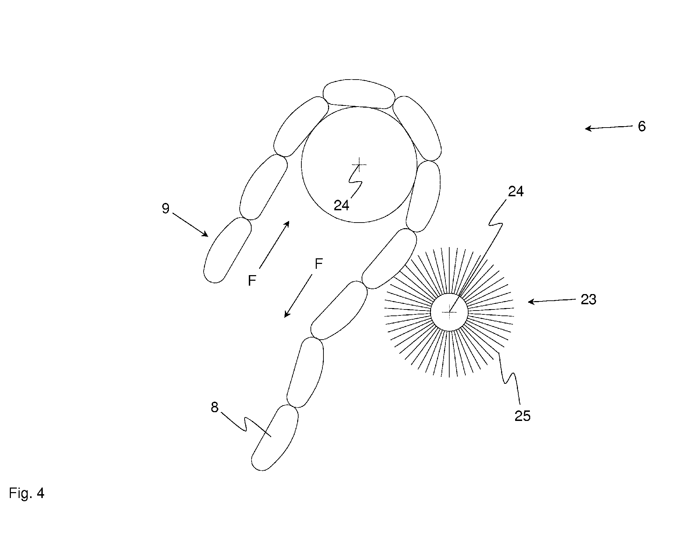

Der Vorteil ist aus der Zusammenschau der Figuren 3 und 4 im Vergleich zu Figur 2 ersichtlich (wobei die Figuren 3 und 4 denselben oberen Umlenkbereich 6 zeigen; beide Figuren unterscheiden sich dadurch, dass die Siebelemente 8 in Figur 4 ausgehend von Figur 3 ein kleines Stück in Förderrichtung F bewegt wurden). Wie aus den Figuren ersichtlich, bewirkt der nach außen gewölbte Abschnitt 13 ein Auslenken der Siebelemente 8 in Richtung der Reinigungsbürste 23, so dass diese mit der gesamten Siebfläche 9 der einzelnen Siebelemente 8 in Kontakt kommen kann, ohne hierbei im Bereich der genannten Berge 35 in die Sieböffnungen eintauchen zu müssen. Mit anderen Worten kommt die Reinigungsbürste 23 ausschließlich über die nach außen gerichteten Bürstenabschnitte 25 und dabei vorzugsweise nur oberflächlich mit den Siebflächen 9 in Kontakt. Im Ergebnis kann die gesamte Siebfläche 9 jedes Siebelements 8 zuverlässig abgereinigt werden, ohne dass es zu einem übermäßigen Verschleiß der Borsten der Reinigungsbürste 23 kommt.

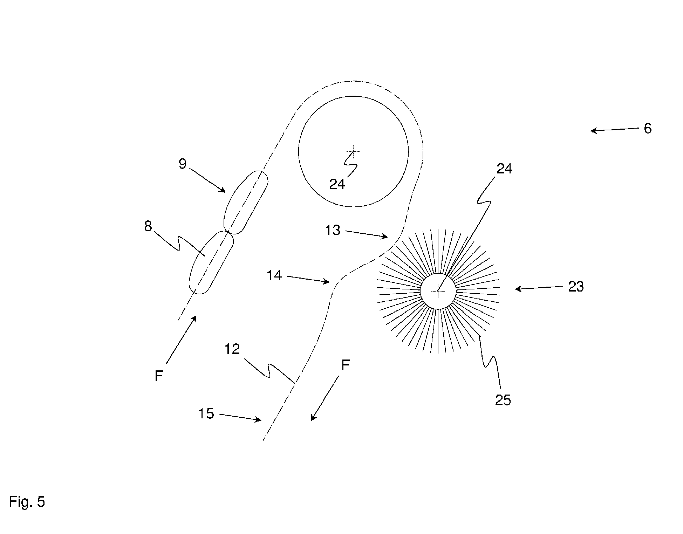

Den Verlauf einer vorteilhaft ausgebildeten Führungsbahn 12, auf der die Siebelemente 8 auf ihrer Umlaufbahn im Bereich der Reinigungseinrichtung 10 geführt werden, ist schematisch in Figur 5 dargestellt. Wie dieser Figur zu entnehmen ist, weist die Führungsbahn 12 im Anschluss an den oberen Umlenkbereich 6 einen nach außen gewölbten Abschnitt 13 auf, der in einer vorteilhaften Weiterbildung der Erfindung direkt (oder unter Zwischenschaltung eines geradlinig verlaufenden Abschnitts) in einen nach innen gewölbten Abschnitt 14 übergeht (aus Übersichtsgründen sind in Figur 5 nur zwei Siebelemente 8 gezeigt; die Anordnung der Siebelemente 8 entspricht jedoch in allen Figuren prinzipiell der Anordnung gemäß Figur 1, so dass eine möglichst ununterbrochene Gesamtsiebfläche vorhanden ist).

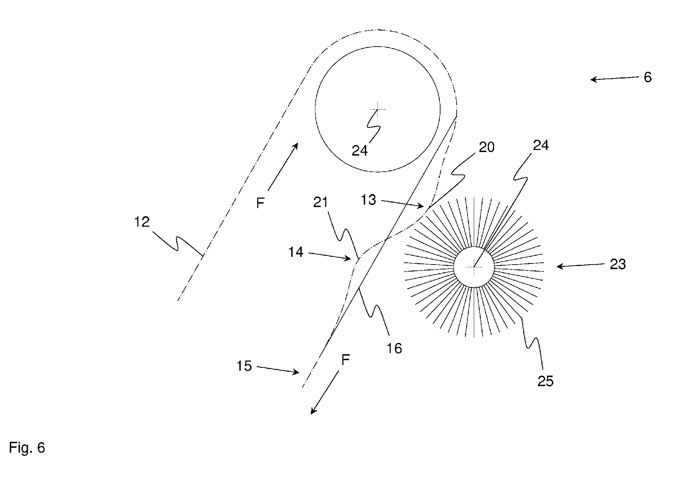

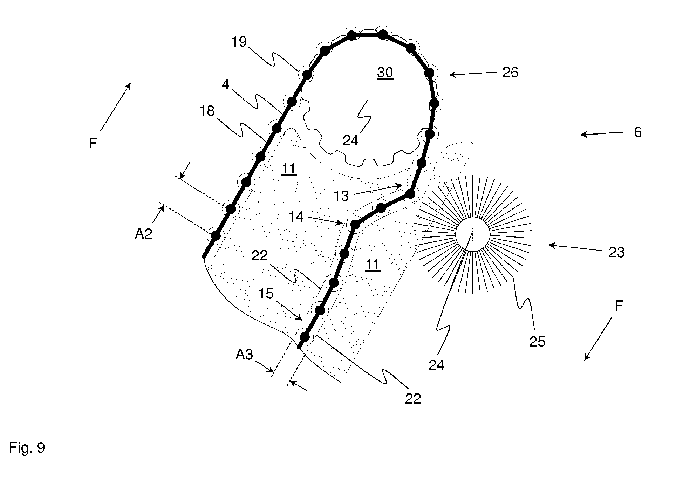

Wie sich aus Figur 6 ergibt, liegen der Tiefpunkt 20 des nach außen gewölbten Abschnitts 13 und der Tiefpunkte 21 des nach innen gewölbten Abschnitts 14 vorzugsweise auf gegenüberliegenden Seiten einer gedachten Verlängerung 16 des geradlinig verlaufenden Abschnitts 15, der dem nach innen gewölbten Abschnitt 14 in Förderrichtung F folgt. Zudem ist es von Vorteil, wenn der in Figur 7 kenntlich gemachte Abstand A1 zwischen den beiden Tiefpunkten 20, 21 der Höhe H der Filterelemente oder dem Abstand A2 zweier benachbarter Führungsrollen 19 entspricht, die im Folgenden mit Bezug auf Figur 9 noch näher beschrieben werden.

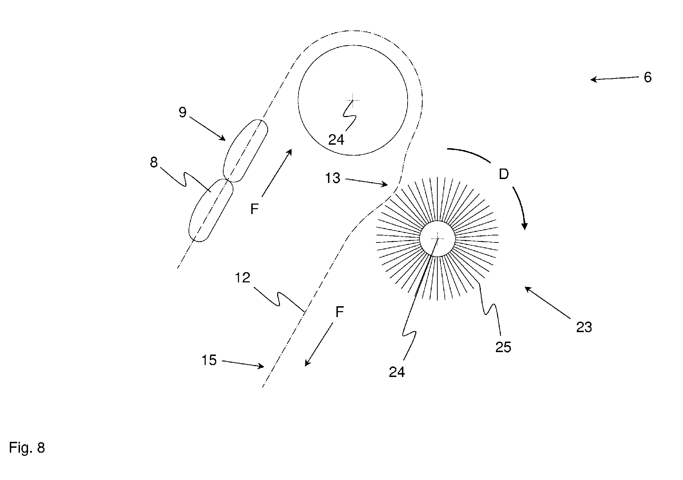

Darüber hinaus zeigt Figur 8, dass es in einer Ausführungsform der Erfindung ausreichend sein kann, wenn die Führungsbahn 12 der Antriebselemente 4 (die vorzugsweise in Form von Antriebsketten 18 vorliegen) lediglich einen dem oberen Umlenkbereich 6 nachgeordneten nach außen gewölbten Abschnitt 13 umfasst. Mit anderen Worten kann unter Umständen auf einen zusätzlichen, nach innen gewölbten Abschnitt 14 verzichtet werden. Die entsprechende Führungsbahn 12 ergibt sich aus Figur 8. Ferner ist dieser Figur exemplarisch für alle Ausführungsbeispiele zu entnehmen, dass die Drehrichtung D einer als Teil der Reinigungseinrichtung 10 ausgebildeten Reinigungsbürste 23 vorzugsweise während des Betriebs der Siebvorrichtung derart gewählt wird, dass sich die mit den jeweils vorbeigeführten Siebflächen 9 in Kontakt kommenden, nach außen gerichteten Bürstenabschnitte 25 in einer Richtung bewegen, die der Förderrichtung F der genannten Siebflächen 9 entgegengesetzt ist. Hierdurch wird die Relativbewegung zwischen den entsprechenden Bürstenabschnitten 25 und den abzureinigenden Siebflächen 9 gegenüber einer entgegengesetzten Drehrichtung D erhöht und die Abreinigung in Folge dessen verbessert.

Abschließend zeigt Figur 9 eine mögliche Führung der an sich nicht gezeigten Siebelemente 8 im Bereich des oberen Umlenkbereichs 6. Die Siebelemente 8 sind beidseitig mit jeweils einer Führungskette verbunden, von der lediglich eine in Figur 9 gezeigt ist und die jeweils in einem oberen Umlenkabschnitt 26 mit Hilfe eines oberen Zahnrads 30 geführt sind (die zweite Antriebskette 18 verläuft in einer parallel zur Blattebene verlaufenden und oberhalb der Blattebene angeordneten Ebene, wobei sich die entsprechenden Siebelemente 8 senkrecht zwischen den beiden Antriebsketten 18 erstrecken). Die Antriebskette 18 besitzt wiederum im Bereich der Gelenke der einzelnen Kettenglieder einzelne Führungsrollen 19, wobei diese vorzugsweise auf der den Siebelementen 8 abgewandten Seite (d. h. mit Blick auf Figur 9: hinter der Antriebskette 18) angeordnet sind.

Um die Führungsrollen 19 und damit auch die Siebelemente 8 auf der in Figur 5 gezeigten Führungsbahn 12 zu führen, besitzt die Siebvorrichtung zumindest im oberen Umlenkbereich 6 ein oder mehrere Führungselemente 11, in denen die Führungsrollen 19 insbesondere im Bereich der nach außen gerichteten Abschnitts und im Bereich des nach innen gerichteten Abschnitts der Führungsbahn 12 geführt sind. Der gegenseitige Abstand A3 benachbarter Führungsflächen 22 weist hierbei einen Betrag auf, der nur geringfügig (beispielsweise maximal 10 % bis 20 %) größer ist als der Durchmesser der Führungsrollen 19, so dass eine möglichst spielarme Führung der Führungsrollen 19 gewährleistet ist. Ein gewisses Spiel sollte jedoch in jedem Fall vorhanden sein, um ein Drehen der Führungsrollen 19 zwischen den jeweils benachbarten Führungsflächen 22 zu ermöglichen.

Die vorliegende Erfindung ist nicht auf die dargestellten und beschriebenen Ausführungsbeispiele beschränkt. Abwandlungen im Rahmen der Patentansprüche sind ebenso möglich wie eine Kombination der in der Beschreibung oder den Patentansprüchen genannten Merkmale, auch wenn sie in unterschiedlichen Ausführungsbeispielen dargestellt und beschrieben sind.

### Bezugszeichenliste

- 1: Verunreinigung
- 2: Abwasser
- 3: Antrieb
- 4: Antriebselement
- 5: unterer Umlenkbereich
- 6: oberer Umlenkbereich
- 7: Auswurf
- 8: Siebelement
- 9: Siebfläche
- 10: Reinigungseinrichtung
- 11: Führungselement
- 12: Führungsbahn
- 13: nach außen gewölbter Abschnitt
- 14: nach innen gewölbter Abschnitt
- 15: geradlinig verlaufender Abschnitt
- 16: Verlängerung des geradlinig verlaufenden Abschnitts
- 17: Spritzdüse
- 18: Antriebskette
- 19: Führungsrolle
- 20: Tiefpunkt der Wölbung des nach außen gewölbten Abschnitts
- 21: Tiefpunkt der Wölbung des nach innen gewölbten Abschnitts
- 22: Führungsfläche
- 23: Reinigungsbürste
- 24: Drehachse
- 25: nach außen gerichteter Bürstenabschnitte
- 26: Umlenkabschnitt
- 27: Bürstenantrieb
- 28: Trägerstruktur
- 29: Abwasserkanal
- 30: oberes Zahnrad
- 31: unteres Zahnrad
- 32: Reinigungsharke
- 33: Dichtleiste
- 34: Tal
- 35: Berg

- A1: Abstand zwischen dem Tiefpunkt der Wölbung des nach außen gewölbten Abschnitts und dem Tiefpunkt der Wölbung des nach innen gewölbten Abschnitts
- A2: Abstand zweier in Förderrichtung benachbarter Führungsrollen
- A3: gegenseitiger Abstand zweier benachbarter Führungselemente
- H: Höhe der Filterelemente
- F: Förderrichtung
- D: Drehrichtung

## Patentansprüche

1. Siebvorrichtung zum Abscheiden und Abtransport von Verunreinigungen (1) aus Abwasser (2)
- mit wenigstens zwei endlosen, parallel zueinander verlaufenden und mit Hilfe eines Antriebs (3) in einer Förderrichtung (F) antreibbaren Antriebselementen (4),
- wobei die Antriebselemente (4) jeweils über einen unteren Umlenkbereich (5) und einen oberen Umlenkbereich (6) auf einer Umlaufbahn geführt sind,
- wobei sich zwischen den Antriebselementen (4) eine Vielzahl von zueinander benachbart angeordneten und mit den Antriebselementen (4) in Verbindung stehenden Siebelementen (8) erstreckt,
- wobei zumindest der Großteil der Siebelemente (8) in einer Seitenansicht der Siebvorrichtung jeweils eine nach außen gewölbte Siebfläche (9) aufweist, und
- wobei die Siebvorrichtung eine dem oberen Umlenkbereich (6) in Förderrichtung (F) nachgeordnete Reinigungseinrichtung (10) aufweist, die von den Siebelementen (8) während ihrer Bewegung entlang der genannten Umlaufbahn passierbar ist, und die ausgebildet ist, die von den Siebelementen (8) zurückgehaltenen Verunreinigungen (1) von den Siebflächen (9) der Siebelemente (8) zu entfernen,
**dadurch gekennzeichnet, dass**
die Antriebselemente (4) und/oder die Siebelemente (8) im Bereich der Reinigungseinrichtung (10) mit Hilfe von Führungselementen (11) jeweils auf einer Führungsbahn (12) geführt sind, wobei die Führungsbahn (12) in der genannten Seitenansicht im Bereich der Reinigungseinrichtung (10) einen nach außen, d. h. in Richtung der Reinigungseinrichtung (10), gewölbten Abschnitt (13) besitzt.

2. Siebvorrichtung nach Anspruch 1, **dadurch gekennzeichnet, dass** der nach außen gewölbte Abschnitt (13) in Förderrichtung (F), vorzugsweise direkt, in einen nach innen gewölbten Abschnitt (14) übergeht.

3. Siebvorrichtung nach einem der vorangegangenen Ansprüche, **dadurch gekennzeichnet, dass** die Führungsbahn (12) in der genannten Seitenansicht im Bereich der Reinigungseinrichtung (10) S-förmig verläuft.

4. Siebvorrichtung nach einem der vorangegangenen Ansprüche, **dadurch gekennzeichnet, dass** der nach innen gewölbte Abschnitt (14) der Führungsbahn (12) der Reinigungsvorrichtung und/oder dem nach außen gewölbten Abschnitt (13) der Führungsbahn (12) in Förderrichtung (F) nachgeordnet ist.

5. Siebvorrichtung nach einem der vorangegangenen Ansprüche, **dadurch gekennzeichnet, dass** der nach außen gewölbte Abschnitt (13) der Führungsbahn (12) in der genannten Seitenansicht auf Höhe der ihm benachbarten Reinigungseinrichtung (10) angeordnet ist.

6. Siebvorrichtung nach einem der vorangegangenen Ansprüche, **dadurch gekennzeichnet, dass** dem nach innen gewölbten Abschnitt (14) der Führungsbahn (12) in Förderrichtung (F) ein geradlinig verlaufender Abschnitt (15) der Führungsbahn (12) nachgeordnet ist.

7. Siebvorrichtung nach dem vorangegangenen Anspruch, **dadurch gekennzeichnet, dass** der Tiefpunkt (20) der Wölbung des nach außen gerichteten Abschnitts (13) und der Tiefpunkt (21) der Wölbung des nach innen gerichteten Abschnitts (14) in der genannten Seitenansicht auf unterschiedlichen Seiten einer gedachten Verlängerung (16) des im vorherigen Anspruch genannten geradlinig verlaufenden Abschnitts (15) liegen.

8. Siebvorrichtung nach einem der vorangegangenen Ansprüche, **dadurch gekennzeichnet, dass** dem nach außen gewölbten Abschnitt (13) der Führungsbahn (12) in Förderrichtung (F) ein geradlinig verlaufender Abschnitt (15) der Förderbahn oder ein Umlenkabschnitt (26) des oberen Umlenkbereichs (6) vorgeordnet ist.

9. Siebvorrichtung nach einem der vorangegangenen Ansprüche, **dadurch gekennzeichnet, dass** die Antriebselemente (4) als endlose Antriebsketten (18) ausgebildet sind, die im Betrieb der Siebvorrichtung jeweils mit Hilfe von Führungsrollen (19) entlang einer der Führungsbahnen (12) führbar sind.

10. Siebvorrichtung nach einem der vorangegangenen Ansprüche, **dadurch gekennzeichnet, dass** der Abstand (A1) zwischen dem Tiefpunkt (20) der Wölbung des nach außen gewölbten Abschnitts (13) und dem Tiefpunkt (21) der Wölbung des nach innen gewölbten Abschnitts (14) einen Betrag aufweist, der dem 0,5 bis 2-fachen, vorzugsweise dem 0,8 bis 1,2-fachen, Abstand (A2) zweier in Förderrichtung (F) benachbarter Führungsrollen (19) entspricht, wenn sich die genannten Führungsrollen (19) im Bereich eines geradlinigen Abschnitts (15) der Führungsbahn (12) befinden.

11. Siebvorrichtung nach einem der Ansprüche 9 und 10, **dadurch gekennzeichnet, dass** die Führungsbahn (12) im Bereich der Wölbungen durch beidseitig der Führungsrollen (19) platzierte Führungselemente (11) definiert ist.

12. Siebvorrichtung nach einem der Ansprüche 9 bis 11, **dadurch gekennzeichnet, dass** die Führungselemente (11) den Führungsrollen (19) zugewandte Führungsflächen (22) besitzen, deren gegenseitiger Abstand (A3) im Bereich der Wölbungen vorzugsweise konstant ist.

13. Siebvorrichtung nach einem der vorangegangenen Ansprüche, **dadurch gekennzeichnet, dass** die Reinigungseinrichtung (10) eine, vorzugsweise ortsfest gelagerte, Reinigungsbürste (23) umfasst, die mit Hilfe eines Bürstenantriebs (27) um eine Drehachse (24) antreibbar ist, wobei die Drehachse (24) vorzugsweise senkrecht zur Förderrichtung (F) verläuft, und wobei die Reinigungsbürste (23) vorzugsweise in einer Drehrichtung antreibbar ist, die eine der Förderrichtung (F) der im Betrieb der Siebvorrichtung an der Reinigungsbürste (23) vorbeigeführten Siebelemente (8) gegenläufige Bewegung der nach außen gerichteten und mit der jeweils benachbarten Siebfläche (9) in Kontakt stehenden Bürstenabschnitte (25) bewirkt.
